(19) Europäisches Patentamt

European Patent Office

Office européen des brevets

(11) Veröffentlichungsnummer : **0 128 542**
**B1**

(12) # EUROPÄISCHE PATENTSCHRIFT

(45) Veröffentlichungstag der Patentschrift :
22.02.89

(51) Int. Cl.⁴ : **G 01 S 13/22**, G 01 S   7/28,
G 01 S 13/54

(21) Anmeldenummer : 84106529.5

(22) Anmeldetag : 07.06.84

(54) **Puls-Doppler-Radargerät mit veränderbarer Pulsfolgefrequenz.**

(30) Priorität : 13.06.83 DE 3321264

(43) Veröffentlichungstag der Anmeldung :
19.12.84 Patentblatt 84/51

(45) Bekanntmachung des Hinweises auf die Patenterteilung : 22.02.89 Patentblatt 89/08

(84) Benannte Vertragsstaaten :
BE DE FR GB IT NL SE

(56) Entgegenhaltungen :
GB--A--   811 470
US--A-- 3 491 360
US--A-- 3 906 498

(73) Patentinhaber : Siemens Aktiengesellschaft Berlin und München
Wittelsbacherplatz 2
D-8000 München 2 (DE)

(72) Erfinder : Siegel, Harald
Johann-Werner-Strasse 4
D-8035 Gauting (DE)
Erfinder : Hauptmann, Rudolf, Dipl.-Ing.
Augustenfelder Strasse 23
D-8060 Dachau (DE)

EP 0 128 542 B1

**Beschreibung**

Die Erfindung bezieht sich auf ein Puls-Doppler-Radargerät mit veränderbarer Pulsfolgefrequenz und mit einer Anordnung zur vektoriellen Integration der Echosignale.

Um die Entdeckungswahrscheinlichkeit von Flugobjekten zu verbessern, ist es bekannt, das Signal-Rauschverhältnis durch Integration aller vom gleichen Ziel empfangenen Echoimpulse beträchtlich zu erhöhen. Auch kleine Bewegtzeichensignale können durch diese Maßnahme in überlagertem Rauschen entdeckt werden. Die Summierung der aufeinanderfolgenden Echosignale eines Zieles kann durch eine kohärente Integration vor der Gleichrichtung oder durch inkohärente Integration der Videosignale also nach der Gleichrichtung erfolgen. Die kohärente Integration erfordert zwar den höheren Aufwand, liefert dafür aber das bessere Signal zu Rauschverhältnis.

Arbeitet ein Puls-Doppler-Radargerät mit einer festen Pulsfolgefrequenz (PRF), dann kann durch Verwendung eines Kammfilters eine phasenrichtige vektorielle Addition der einzelnen Echosignale durchgeführt werden. Die Realisierung dieser Maßnahmen stellt eine optimale Lösung für die Bewegtzeichenentdeckung dar. Um den gesamten Dopplerfrequenzbereich abzudecken, ist die dazu notwendige Filteranzahl wegen der Kammstruktur gleich der Anzahl der integrierten Echosignale.

Um Blindgeschwindigkeitsbereiche eines Puls-Doppler Radargerätes zu eleminieren, ist es auch bekannt, mit wechselnden Pulsfolgefrequenzen zu arbeiten siehe z. B. US-A-3906498. Die Verwendung mehrerer Pulsfolgefrequenzen bei Radargeräte mit Bewegtzeichenfilter hat jedoch den Verlust der Kammstruktur der Bewegtzeichenfilter zur Folge. Arbeitet das Puls-Doppler-Radargerät mit statistischer Pulsfolgefrequenz, so muß der gesamte interessierende Dopplerfrequenzbereich durch eine große Anzahl kohärent integrierender Filter abgedeckt werden. Wenn auch in der Praxis mit quasi-statistischer Pulsfolkfrequenz gearbeitet wird, bei der sich die unterschiedlich langen Pulsperioden nach einem abgeschlossenen Integrationsintervall wiederholen, müssen über den ganzen Eindeutigkeitsbereich Statistik-Filter verteilt werden. Die Anwendung der kohärenten Integration bei Puls-Doppler-Radargeräten mit quasi-statistischer Pulsfolgefrequenz ist daher aus wirtschaftlichen Gründen nicht mehr tragbar.

Der Erfindung liegt die Aufgabe zugrunde, bei einem Puls-Doppler-Radargerät der eingangs genannten Art eine Lösung anzugeben, welche die Benutzung mehrerer Pulsfolgefrequenzen mit einem Filteraufwand ermöglicht, der etwa demjenigen bei Verwendung einer festen Pulsfolgefrequenz entspricht.

Gemäß der Erfindung wird diese Aufgabe dadurch gelöst, daß der Mittelwert der Frequenzen der von aufeinanderfolgenden Werten gebildeten Pulsfolgefrequenzpaare konstant ist und daß eine aufgrund des Pulsfolgefrequenz-Wechsels erforderliche Phasenrückdrehung der Echosignale um einen konstanten Wert solcher Größe erfolgt, daß die Phasenbedingung für die Durchführung der kohärenten Integration nach jeder zweiten Pulsfolgefrequenz erfüllt ist.

Diese Maßnahmen bewirken, daß die einzelnen Echosignale mit einem Wert

$$e^{-j \cdot \omega_0 \cdot n \cdot \overline{PRT}}$$

multipliziert werden und dadurch eine konstante Rückdrehung der Phasen der Echosignale vor ihrer Integration bei entsprechender Staffelung der Pulsfolgefrequenz erfahren. Mit $\omega_0$ ist die Filtermittenfrequenz, mit n der n-te Echoimpuls und mit $\overline{PRT}$ die mittlere Periodendauer der Sendepulsfolge bezeichnet.

Trotz der gestaffelten Pulsfolgefrequenz wird auf diese Weise die Dopplerfrequenz 0 Hz so behandelt, als würden die Filter mit einer konstanten Pulsfolgefrequenz betrieben. Auch die Festzeichenunterdrückung bleibt voll erhalten, da der Bereich um 0 Hz bei allen Filtern von Nebenzipfeln frei gehalten ist.

Gemäß einer vorteilhaften Weiterbildung der Erfindung kann die Staffelung der Perioden der aufeinanderfolgenden Sendeimpulse nach der Beziehung

$$PRT_{n+1} = (\overline{PRT}_1 + [n \cdot (-1)^n \cdot \Delta T])$$

bemessen werden. Darin ist mit n die Folge der Sendepulse, mit $\overline{PRT}_1$ eine konstante Periodendauer der Sendepulse und mit $\Delta T$ ein konstanter Bruchteil der Periodendauer bezeichnet. Bei einer derartigen Bemessung der Pulswiederholzeiten, bei der die Summe zweier aufeinanderfolgender Pulswiederholzeiten einen für alle Paare gleichbleibenden Wert ergibt, entsteht in den Filtern eine Kammstruktur. Diese Kammstruktur wird umso regelmäßiger, je geordneter die Staffelung der Pulswiederholzeiten erfolgt.

Die Erfindung und weitere Einzelheiten der Erfindung werden anhand der Figuren 1 bis 3 näher erläutert.

Es zeigen

Fig. 1 ein Prinzipschaltbild des Signalverarbeitungszweiges eines Puls-Doppler-Radargerätes mit vektorieller Integration,

Fig. 2 eine Schaltung zur Durchführung einer vektoriellen Integration, anhand der die modifizierte kohärente Integration erläutert wird,

Fig. 3 bis 5 Beispiele für Staffelungen der Pulsfolgeperiode,

Fig. 6 und 7 die Übertragungsfunktionen der Integrationsschaltung für zwei verschiedene Staffelungen der Pulsfolgeperiode.

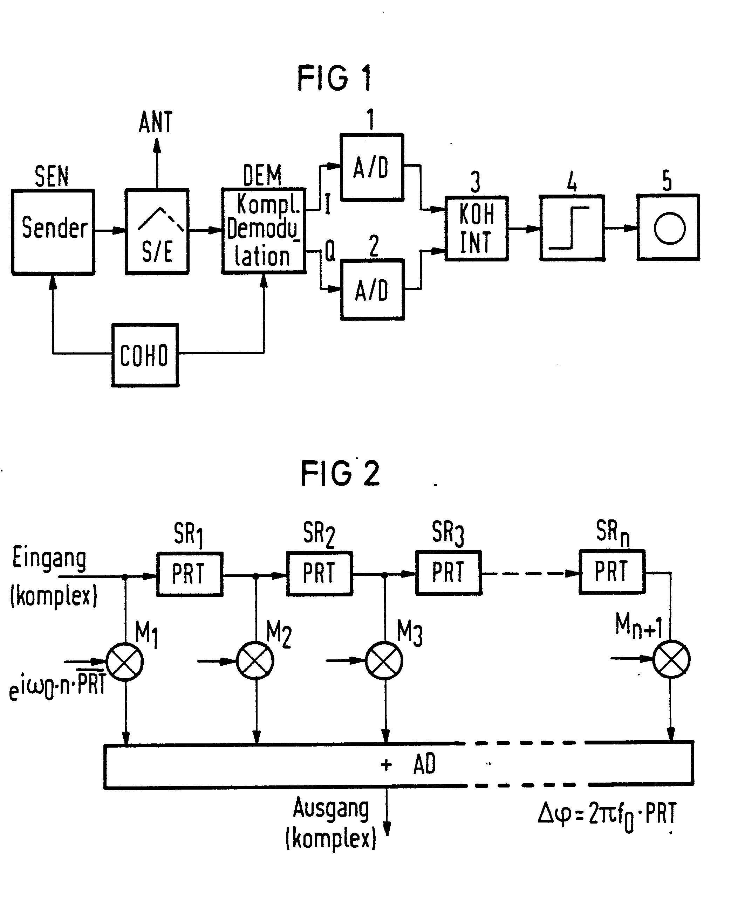

Die Sende-/Empfangsschaltung des Radargerätes nach Fig. 1 mit dem Sender SEN und mit dem Demodulator DEM für die komplexe Demodulation ist über den Sende-/Empfangsschalter S/E mit der Antenne ANT verbunden. Der zugehörige Kohärenzoszillator ist mit COHO bezeichnet. Die beiden Ausgänge I und Q des Demodulators sind zur Analog-Digital-Wandlung der Videosignale mit den Analog-Digital-Wandlern 1 und 2 verbunden. Die weiteren Stufen des Verarbeitungszweiges des Optimalempfängers bestehen aus einer Schaltung 3 zur vektoriellen Integration, einer Schwellenschaltung 4 und einer Anzeigeeinrichtung 5. Mittels der Integrationsschaltung 3 soll eine modifizierte kohärente Integration der Echosignale durchgeführt werden, um den Filteraufwand der in einem Puls-Doppler Radargerät mit veränderbarer Pulsfolgefrequenz für eine kohärente Integration erforderlich wäre, erheblich reduzieren zu können. Die Voraussetzungen für die Durchführung einer modifizierten kohärenten Integration bestehen in der Durchführung einer bestimmten Staffelung der Pulsfolgefrequenz und in einer Phasenrückdrehung der Signalspannungen, die einen vorgegebenen konstanten Wert aufweist. Durch die modifizierte kohärente Integration wird eine nahezu optimale Zielentdeckung gewährleistet. Dabei werden die Echosignale eines Entfernungstores über mehrere Empfangsperioden vektoriell aufaddiert. Unter Ausnützung dieser Eigenschaft kann Überreichweiten-Clutter weitgehend unterdrückt werden, wenn die mittlere Leistung von Überreichweitenechos auf mehrere Entfernungstore verteilt wird. Die angestrebte Wirkung kann durch eine bestimmte Staffelung der Pulsfolgefrequenz erreicht werden. Werden dabei die unterschiedlichen Pulsfolgeperioden statistisch aneinandergereiht, so ist im Falle der Anwendung einer herkömmlichen kohärenten Integration eine erhebliche Anzahl von kohärenten Filtern erforderlich, um den ganzen interessierenden Dopplerfrequenzbereich abzudecken. Mit der modifizierten kohärenten Integration gemäß der Erfindung ist eine erhebliche Reduzierung des Aufwandes möglich, und es können mit einer geringen Anzahl von Filtern z. B. Überreichweitenechos spektral von den Bewegtzielen der eindeutigen Reichweite unterschieden werden. Die grundlegende Wirkung einer derartigen Anordnung besteht darin, auch bei quasi-statistischer Pulsfolgefrequenz eine Art Kammfilterstruktur zu erhalten. Diese wird umso regelmäßiger je geordneter die Staffelung der Pulsfolgefrequenzen erfolgt.

Fig. 2 zeigt den schaltungsmäßigen Aufbau der Anordnung 3 nach Fig. 1 zur modifizierten kohärenten Integration der Echosignale. Die digitalen Signale werden eingangsseitig einer Hintereinanderschaltung von n Schieberegistern $SR_1$ bis $SR_n$ zugeführt, deren Anzahl der Zahl der zu integrierenden Signalwerte entspricht. Die Ein- bzw. Ausgänge der Schieberegister erhalten je einen Abgriff der an je einen Multiplizierer $M_1$ bis $M_{n-1}$ geführt ist. Der Ausgang jedes Multiplizierers ist mit einer gemeinsamen Addierschaltung AD verbunden. Jedes Schieberegister $SR_1$ bis $SR_n$ liefert eine Verzögerung, die die mittlere Periodendauer der Pulsfolgeperiode $\overline{PRT}$ des Radargerätes entspricht.

Um bei einer kohärenten Integration die vektorielle Addition der Abtastwerte vornehmen zu können, ist eine Phasenrückdrehung der einzelnen Abtastwerte erforderlich, die normalerweise aus der momentanen Pulswierderholzeit und der Filtermittenfrequenz abgeleitet werden muß. Bei der hier angewendeten modifizierten kohärenten Integration werden alle Abtastwerte an den Abgriffen zwischen den Schieberegistern $SR_1$ bis $SR_n$ in den Multiplizierern $M_1$ bis $M_{n-1}$ einer Wichtung unterzogen, indem die einzelnen Abtastwerte mit dem Faktor $e^{-j\omega_0 \cdot n \cdot \overline{PRT}}$ multipliziert werden. Diese Wichtung bewirkt eine konstante Phasenrückdrehung der Abtastwerte, so daß nach jeweils zwei Phasenrückdrehschritten die erforderliche Phasenbedingung für eine vektorielle Addition der Abtastwerte wiederhergestellt ist. Im Wichtungsfaktor bedeuten

$$\omega_0 = 2\,\pi f_0\,,$$

worin $f_0$ die Filtermittenfrequenz, n die Anzahl der Abtastwerte und $\overline{PRT}$ die mittlere Periodendauer der Pulsfolgefrequenz darstellen.

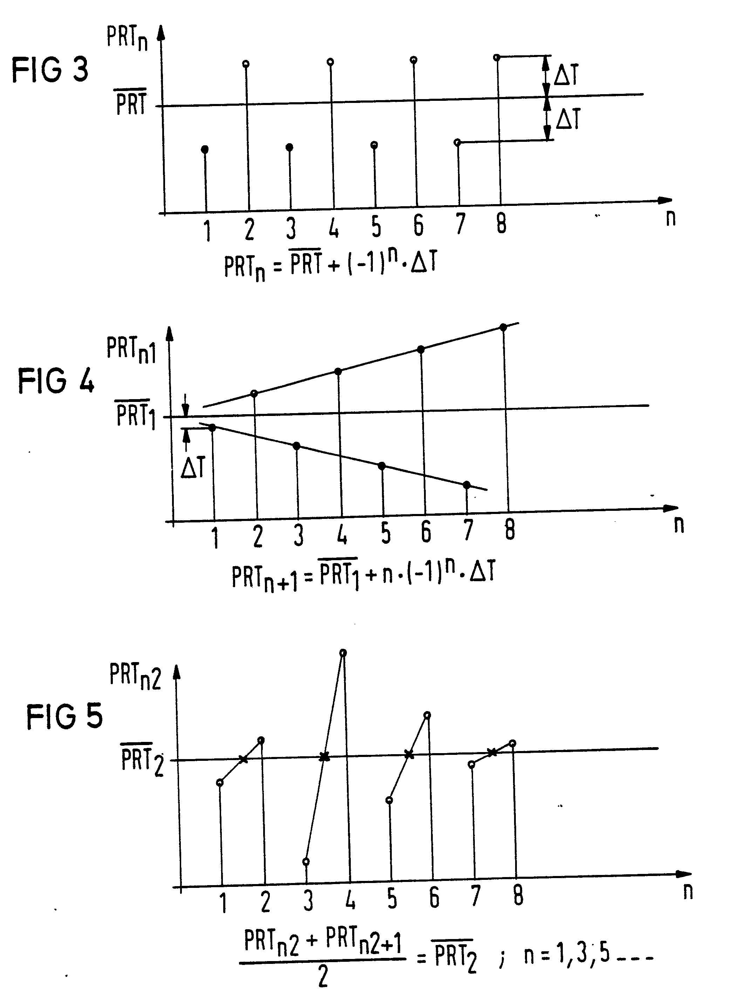

Um in der Integrationsschaltung auch bei quasi-statistischer Pulsfolgefrequenz eine Kammfilterstruktur zu erhalten, ist die Staffelung der Pulswiederholzeiten so zu wählen, daß jeweils die Summe zweier aufeinanderfolgender Impulswiederholzeiten einen für alle Paare aufeinanderfolgender Pulse gleichbleibenden Wert ergibt. Die Beispiele für Staffelungen der Pulsfolgeperiode in den Fig. 3 bis 5 gehen auf Übertragungsfunktionen zurück, die mit modifizierter kohärenter Integration berechnet wurden. Die Fig. 3 zeigt ein Beispiel für eine Staffelung bei der zwei Pulsfolgeperioden verwendet werden, die sich von der mittleren Pulsfolgeperiode $\overline{PRT}$ durch einen Wert $\Delta T$ unterscheiden und die sich nach folgender Formel bestimmen lassen :

$$PRT_n = \overline{PRT} + [(-1)^n \cdot \Delta T]$$

Bei einem weiteren in Fig. 4 dargestellten Beispiel für eine PRT-Staffelung werden z. B. acht verschiedene Pulsfolgeperioden mit linear ansteigender Abweichung von der mittleren Pulsfolgeperiode $\overline{PRT}$ verwendet, die sich nach der folgenden Formel berechnen :

3

$$PRT_{n+1} = \overline{PRT}_1 + [n \cdot (-1)^n \cdot \Delta T]$$

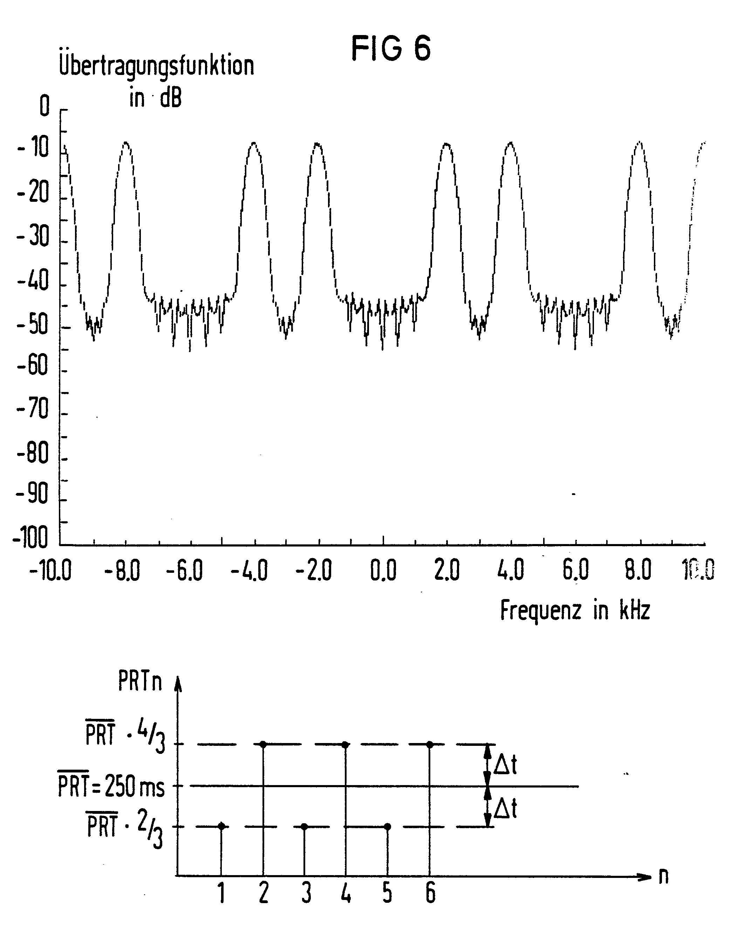

Während die Beispiele nach Fig. 3 und 4 eine geordnete Staffelung aufweisen, liegt dem Beispiel nach Fig. 5 eine völlig statistische Staffelung zugrunde, bei der keine paarweise Zuordnung mehr vorliegt. Die einzelnen Pulsfolgeperioden sind hier durch folgende Formel bestimmt:

$$\overline{PRT}_2 = \frac{PRT_{n2} + PRT_{n2+1}}{2}$$

Für $n = 1, 3, 5, \ldots$

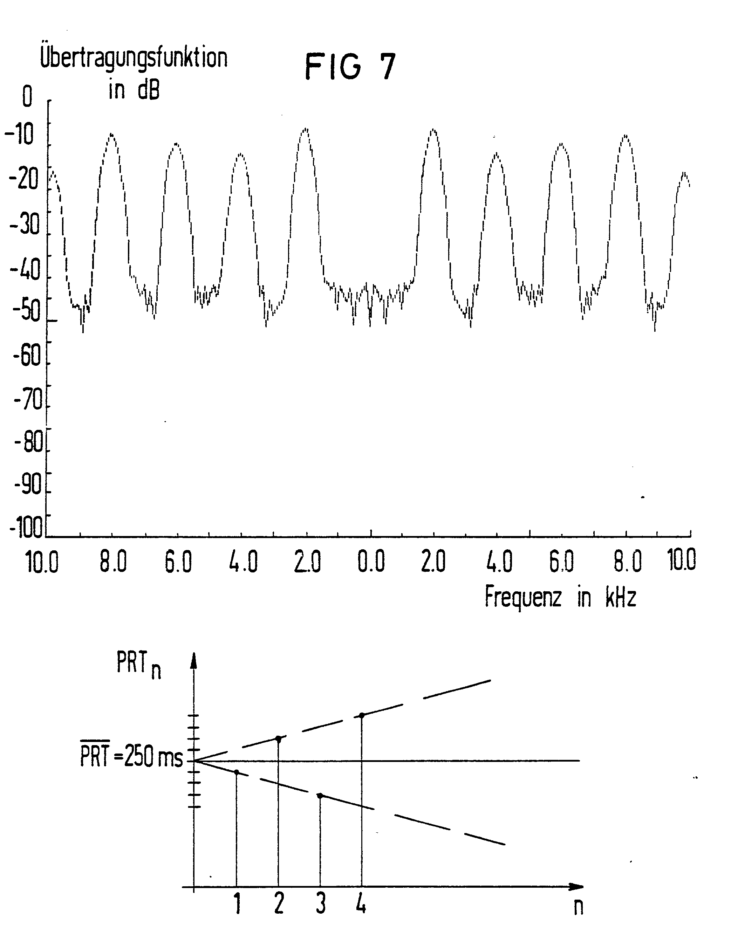

In den Fig. 6 und 7 sind zwei Kammstrukturen, die auf die in den Fig. 3 und 4 dargestellten Beispiele einer geordneten Staffelung zurückgehen, über der Frequenz dargestellt. Die Übertragungsfunktionen resultieren aus einer modifizierten kohärenten Integration von 16 Impulsen. Beiden Übertragungsfunktionen liegt eine mittlere Pulsfolgefrequenz PRF von 4 kHz mit einer entsprechenden Pulsfolgeperiode $PRT = 250$ µs zugrunde.

In Fig. 6 sind unterhalb der Übertragungsfunktion die Werte für die Staffelung der Pulsfolgeperiode angegeben. Wie aus der Darstellung ersichtlich, wechselt die Periode aufeinanderfolgender Abfrageimpulse zwischen den beiden Werten $2/3 \cdot \overline{PRT}$ und $4/3 \cdot \overline{PRT}$. Der Mittelwert von jeweils zwei aufeinanderfolgenden Pulsfolgeperioden nimmt einen konstanten Wert nämlich 250 µs und $\Delta T$ den Wert $1/3 \, \overline{PRT}$ an.

Die Phasenrückdrehung der Signalwerte erfolgt hierbei mit einem konstanten Wert $\Delta\varphi = 2 \, T \cdot f_0 \cdot \overline{PRT}$. Darin bedeutet $f_0 = 2$ kHZ die Filtermittenfrequenz. Die aufgrund der konstanten Phasenrückdrehung ermöglichte vektorielle Addition der Abtastwerte läßt in ihrer Übertragungsfunktion deutlich die Kammstruktur erkennen. ein weiteres wichtiges Merkmal dieser Übertragungsfunktion ist, daß der Frequenzbereich um die Dopplerfrequenz 0 im Sperrbereich liegt, wodurch auch die Festzeichenunterdrückung gewährleistet ist.

Die in Fig. 7 dargestellte Übertragungsfunktion, die auf eine PRT-Staffelung gemäß Fig. 4 zurückgeht, ist nicht auf die Verwendung von zwei verschiedenen Pulsfolgefrequenzen beschränkt, sondern kann theoretisch eine beliebig große Anzahl verwenden. Das wesentliche Merkmal auch der hier angegebenen Staffelung besteht darin, daß jeweils zwei aufeinanderfolgende Pulsfolgeperioden-Paare einen konstanten mittleren Wert annehmen.

Die für die modifizierte kohärente Integration wesentliche konstante Phasenrückdrehung der Abtastwerte beträgt hier im Ausführungsbeispiel nach Fig. 7·

$$\Delta\rho = 2 \, \pi \cdot f_0 \cdot \overline{PRT}_1 \, .$$

Die Kammstruktur der Übertragungsfunktion und die Nullstelle im Bereich der Dopplerfrequenz 0 Hz ist auch hier deutlich erkennbar.

## Patentansprüche

1. Puls-Doppler-Radargerät mit veränderbarer Pulsfolgefrequenz und mit einer Anordnung (3) zur vektoriellen Integration der Echosignale, dadurch gekennzeichnet, daß der Mittelwert der Pulsfolgefrequenzen von aufeinanderfolgenden Impulsen konstant gehalten wird und daß eine aufgrund des Pulsfolgefrequenz-Wechsels erforderliche Phasenrückdrehung der Echosignale um einen konstanten Wert solcher Größe erfolgt, daß die Phasenbedingung für die Durchführung der kohärenten Integration nach jeder zweiten Pulsfolgefrequenz erfüllt ist.

2. Puls-Doppler-Radargerät nach Anspruch 1, dadurch gekennzeichnet, daß die Staffelung der Periode aufeinanderfolgender Sendeimpulse nach folgender Bemessung erfolgt:

$$PRT_{n+1} = \overline{PRT}_1 + [n \cdot (-1)^n \cdot \Delta T]$$

wobei n die Folge der Sendeimpulse bezeichnet, $\overline{PRT}_1$ eine konstante Periodendauer und $\Delta T$ einen konstanten Bruchteil der Periodendauer PRT darstellt.

## Claims

1. Pulse Doppler radar device with variable pulse repetition frequency and with an arrangement (3) for the vectorial integration of the echo signals, characterized in that the mean value of the pulse repetition frequencies of successive pulses is kept constant and that a rotating-back of the phases of the echo signals, which is necessary due to the change in pulse repetition frequency, is effected by a constant value of such a magnitude that the phase condition for carrying out the coherent integration after each second pulse repetition frequency is satisfied.

2. Pulse Doppler radar device according to Claim 1, characterized in that the periods of successive transmit pulses are staggered in accordance with the following dimensioning :

$$PRT_{n+1} = PRT_1 + [n \cdot (-1)^n \cdot \Delta T]$$

where n is the sequence of transmit pulses, $PRT_1$ is a constant period of time and $\Delta T$ is a constant fraction of the period time PRT.

**Revendications**

1. Appareil radar Doppler à impulsions possédant une fréquence de récurrence modifiable des impulsions et comportant un dispositif (3) servant à réaliser l'intégration vectorielle des signaux d'échos, caractérisé par le fait que la valeur moyenne des fréquences de récurrence d'impulsions successives est maintenue constante et qu'une rotation rétrograde de phase des signaux d'échos, qui est nécessaire en raison du changement de la fréquence de récurrence des impulsions, s'effectue sur une valeur constante telle que la condition de phase pour l'exécution de l'intégration cohérente est satisfaite après chaque seconde fréquence de récurrence des impulsions.

2. Appareil radar Doppler à impulsions suivant la revendication 1, caractérisé par le fait que l'échelonnement et la période d'impulsions d'émission successives s'effectue conformément à la relation suivante :

$$PRT_{n+1} = \overline{PRT}_1 + [n \cdot (-1)^n \cdot \Delta T]$$

n désignant la suite des impulsions d'émission, $\overline{PRT}_1$ une durée constante de la période et $\Delta T$ une fraction constante de la durée PRT de la période.

5

## FIG 1

## FIG 2

$$e^{i\omega_0 \cdot n \cdot \overline{PRT}}$$

$$\Delta\varphi = 2\pi f_0 \cdot PRT$$

FIG 3

$$PRT_n = \overline{PRT} + (-1)^n \cdot \Delta T$$

FIG 4

$$PRT_{n+1} = \overline{PRT_1} + n \cdot (-1)^n \cdot \Delta T$$

FIG 5

$$\frac{PRT_{n2} + PRT_{n2+1}}{2} = \overline{PRT_2} \quad ; \quad n = 1,3,5 ---$$

# FIG 6

Übertragungsfunktion
in dB

Übertragungsfunktion
in dB

FIG 7